(19) Europäisches Patentamt

European Patent Office

Office européen des brevets

(11) **EP 0 349 182 B1**

(12) **EUROPEAN PATENT SPECIFICATION**

(45) Date of publication and mention
of the grant of the patent:
**26.02.1997 Bulletin 1997/09**

(51) Int Cl.6: **G06T 11/20**

(21) Application number: **89306213.3**

(22) Date of filing: **20.06.1989**

(54) **Method and apparatus for approximating polygonal line to curve**

Verfahren und Gerät zur Annäherung einer Kurve mit einer polygonalen Linie

Méthode et appareil pour l'approximation d'une courbe par une ligne polygonale

(84) Designated Contracting States:
**DE FR GB**

(30) Priority: **29.06.1988 JP 159208/88**
**07.09.1988 JP 222438/88**

(43) Date of publication of application:
**03.01.1990 Bulletin 1990/01**

(73) Proprietor: **FUJITSU LIMITED**
**Kawasaki-shi, Kanagawa 211 (JP)**

(72) Inventors:
- **Okamoto, Masayuki**
  **Yokohama-shi Kanagawa 223 (JP)**
- **Yamauchi, Mitsuru**
  **Inagi-shi Tokyo 206 (JP)**
- **Mima, Toshiya**
  **Kawasaki-shi Kanagawa 211 (JP)**

(74) Representative:
**Skone James, Robert Edmund et al**
**GILL JENNINGS & EVERY**
**Broadgate House**
**7 Eldon Street**
**London EC2M 7LH (GB)**

(56) References cited:
**US-A- 3 860 805**

- **COMPUTER GRAPHICS AND IMAGE PROCESSING, vol. 3, 1974, pages 346-349; G.M. CHAIKIN: "An algorithm for high-speed curve generation"**
- **COMPUTER AIDED GEOMETRIC DESIGN, vol. 1, 1984, pages 1-60; W. BÖHM et al.: "A survey of curve and surface methods in CAGD"**

**Description**

The present invention relates to a method /and apparatus for approximating a polygonal line to a curve used in a computer graphic display unit, a graphic printing unit and the like.

Generally, in a computer graphic display unit, a graphic printing unit, or the like, a complex process is required when wishing to directly generate a curve for a display thereof, and therefore, as an alternative, a polygonal line is approximated to a curve and a plurality of line segments corresponding thereto generated and displayed.

In a prior art method of approximating a polygonal line for a curve, for example, a curve is divided into a predetermined number of parts, and only the coordinates of division points on the curve are calculated, and then the curve is approximated by a polygonal line having a plurality of line segments linking the above-mentioned coordinates on the curve.

US-A-3860805 describes such a method, where a polygonal line is approximated to a parabolic curve by defining start and end points and obtaining the midpoint then repeating this process between ever closer points until the desired number of points of the curve have been defined.

Computer Aided Geometric Design, Vol 1, 1984, p 6-11 describes various forms of Bezier curves.

Nevertheless, to obtain a precise display of a curve having a large curvature by a polygonal line, the number of divisions, i.e., the number of line segments, must be increased, thus increasing the processing time and the data amount. On the other hand, the precision for a curve having a small curvature is too high.

According to one aspect of the present invention, apparatus, such as a computer graphic apparatus or the like, for approximating a polygonal line to a curve comprises data input means for generating a start point, first and second control points, and an end point for a three-dimensional Bezier curve; calculating means for calculating a first middle point between the first and second control points of the Bezier curve, for calculating a second middle point between the start and end points of the Bezier curve, and for calculating an error between the first and second middle points; error determining means for determining whether or not the error is smaller than a predetermined value; and line segment generating means for generating a line segment linking between the start and end points of the three-dimensional Bezier curve as one part of the polygonal line, when the error is smaller than the predetermined value, wherein the error determining means repeats the operation of the calculating means and the line segment generating means, by dividing the three-dimensional Bezier curve into two further three-dimensional Bezier curves when the error is not smaller than the predetermined value.

According to a second aspect of the present invention, a computer graphics method of approximating a polygonal line to a curve comprises the steps of: generating a start point, a first control point, a second control point, and an end point for a three-dimensional Bezier curve; calculating a first middle point between the first and second control points of the three-dimensional Bezier curve; calculating a second middle point between the start and end points of the three-dimensional Bezier curve; calculating an error between the first and second middle points; determining whether or not the error is smaller than a predetermined value; generating a line segment linking the start and end points of the three-dimensional Bezier curve as one part of the polygonal line, when the error is smaller than the predetermined value; and repeating the process of the four point generating step, the first middle point calculating step, the second middle point calculating step, and the line segment generating step, by dividing the three-dimensional Bezier curve into two further three-dimensional Bezier curves, when the error is not smaller than the predetermined value.

As a result of the invention, the number of divisions, i.e., the number of line segments, is large for a curve (curve portion) having a large curvature, but the number of divisions, i.e., the number of line segments, is small for a curve (curve portion) having a small curvature. Namely, the number of divisions, i.e., the number of line segments, for a curve is changed in accordance with the curvature thereof, and the curve is effectively and smoothly approximated to a polygonal line of a plurality of line segments without increasing the processing time and the amount of data.

The present invention will be more clearly understood from the description as set forth below with reference to the accompanying drawings, wherein;

Fig. 1 is a diagram illustrating the principle of the present invention;
Fig. 2 is a diagram explaining the generation of a line segment;
Fig 3. is a block circuit diagram illustrating a graphic display unit to which a polygonal line approximation apparatus according to an example of the present invention is applied;
Fig. 4 is a block circuit diagram illustrating an embodiment of the polygonal line approximation apparatus;
Fig. 5 is a block diagram showing the curve dividing circuit of Fig. 4;
Fig. 6 is a diagram explaining the division of a three-dimensional Bezier curve;
Fig. 7 is a circuit diagram showing the coordinate dividing circuit of Fig. 5;
Fig. 8 is another circuit diagram of the curve dividing circuit of Fig. 4;
Fig. 9 is a graph showing an error calculation of the error calculating circuit of Fig. 4;
Fig. 10 is a circuit diagram of an error calculation of the error calculating circuit of Fig. 4;

Fig. 11 is a circuit diagram of the middle point calculating circuit of Fig. 9;

Fig. 12 is a flow chart showing another embodiment of the present invention;

Figs. 13A, 13B, 13C, and 13D are diagrams for explaining a three-dimensional Bezier curve to which a further embodiment of the present invention is applied;

Fig. 14 is a block diagram of a modification of the error calculating circuit of Fig. 4, for carrying out the embodiment of Figs. 13A, 13B, 13C and 13D; and

Fig. 15 is a flow chart showing a further embodiment of the present invention.

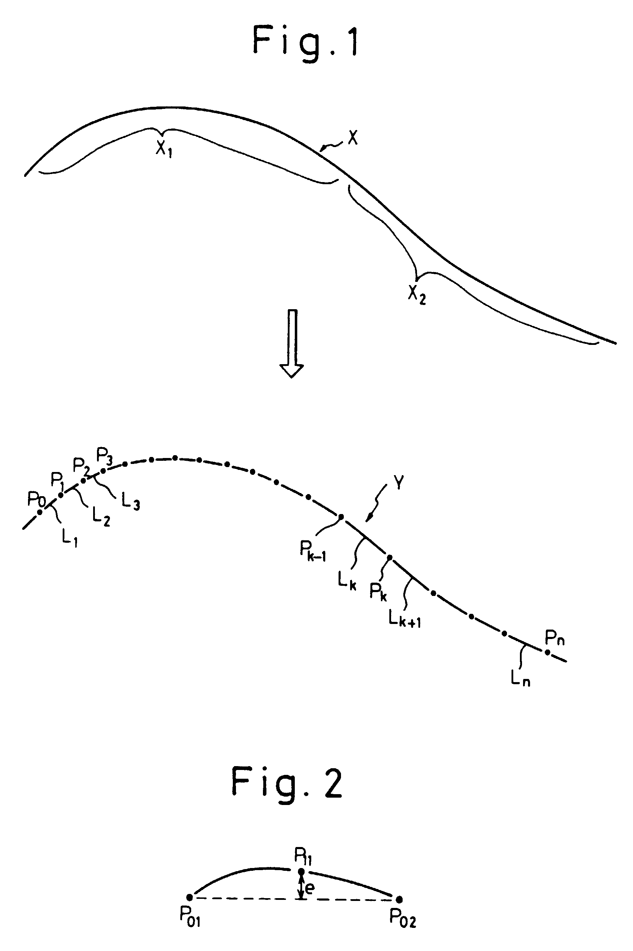

In Fig. 1, which illustrates the principle of the present invention, a curve x is approximated to a polygonal line Y having a plurality of line segments $L_1$, $L_2$,...., $L_n$ divided by division points $P_0$, $P_1$, ...$P_n$ on the curve X. According to the present invention, the number of division points $P_0$, $P_2$,..., i.e., the number of line segments $L_1$, $L_2$,..., is large for a curve portion $X_1$ having a large curvature, thus obtaining a high precision. On the other hand, the number of division points $P_{k-1}$, $P_k$,..., $P_n$, i.e., the number of line segments $L_k$, $L_{k+1}$,..., $L_n$, is small for a curve portion $X_2$ having a small curvature, thus decreasing the data amount.

To realize the principle of the present invention of Fig. 1, as illustrated in Fig. 2, a curve $P_{01}P_{02}$ is divided into two curve portions $P_{01}P_{11}$ and $P_{11}P_{02}$ at a division point $P_{11}$, and an error e between a line segment $\overline{P_{01}P_{02}}$ and the division point $P_{11}$ is calculated. As a result, when the error e is small, the above-mentioned line segment $\overline{P_{01}P_{02}}$ is treated as polygonal line data, and when the error e is large, the above-mentioned dividing process is repeated to perform an approximation of a polygonal line for the curve.

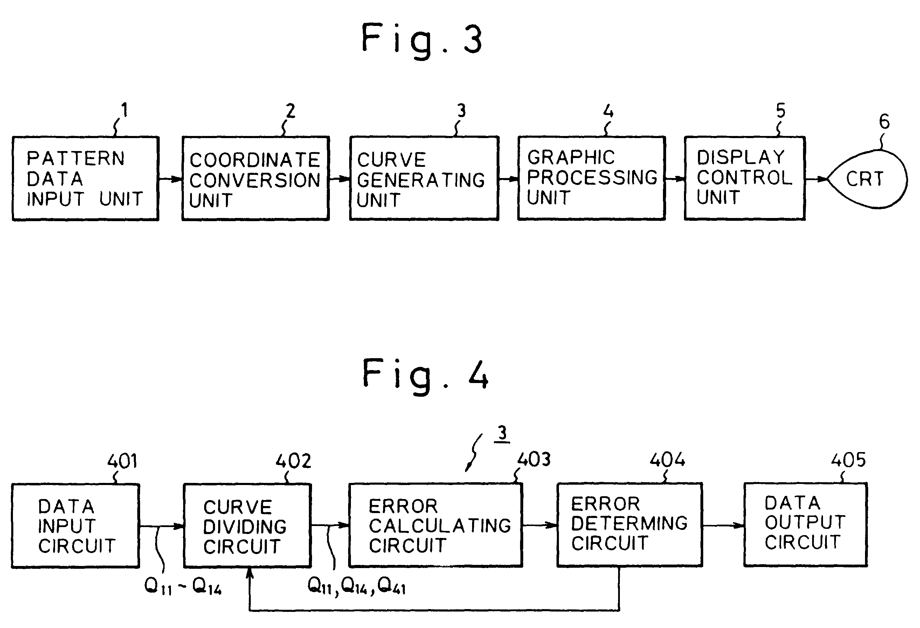

In Fig. 3, which illustrates a graphic display unit to which the present invention is applied, reference 1 designates a diagram data input unit, 2 a coordinate conversion unit, 3 a curve generating unit, 4 a depiction process unit, and 5 a display control unit for controlling a CRT 6. The polygonal line approximation apparatus according to the present invention is used as the curve generating unit 3. Also, the present invention can be applied to a graphic printing unit. In this case, the display control unit 5 and the CRT 6 are replaced by a printing control unit and a printer unit, respectively.

In Fig. 4, which illustrates an embodiment of the present invention, a data input circuit 401 processes four coordinates $Q_{11}$ to $Q_{14}$ representing a three-dimensional Bezier curve and transmits them to a curve dividing circuit 402. The curve dividing circuit 402 performs a dividing operation $t_s$: $1-t_s$ upon a curve of an input coordinate from the data input circuit 401 or a curve of a curve data returned from an error determining circuit 404, and an error calculating circuit 403 calculates an error between the division point of the divided curves and a line segment to be approximated to the curve. The error determining circuit 404 compares the error calculated by the error calculating circuit 403 and a predetermined threshold value of the error. As a result, when the error is smaller than the threshold value, the circuit 404 transmits the data to a data output circuit 405. Conversely, when the error is not smaller than the threshold value, the circuit 404 returns the data to the curve dividing circuit 402. The data output portion 405 performs an output operation upon the data of a polygonal line of a plurality of line segments for an approximated curve.

Each of the circuits 402 and 403 of Fig. 4 will be explained in more detail.

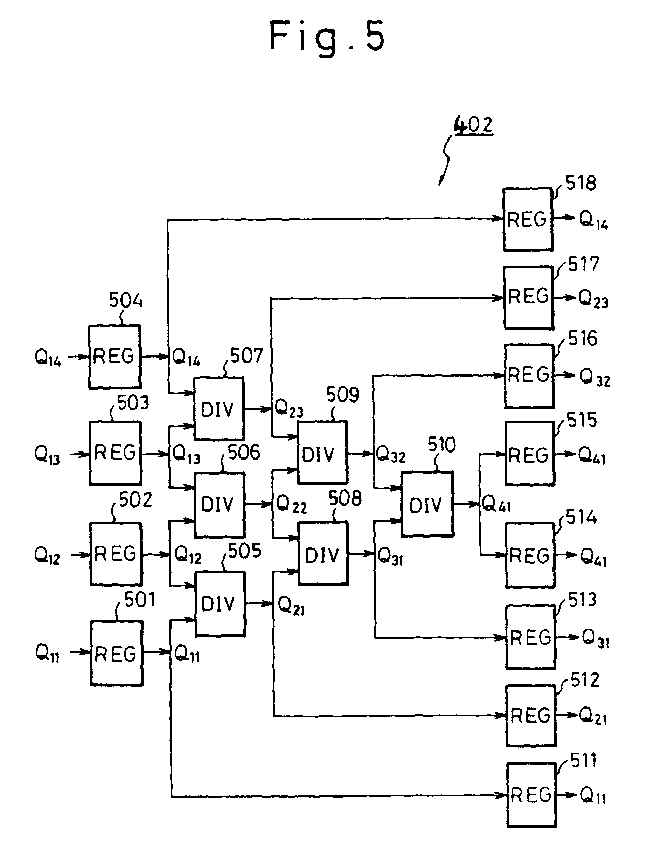

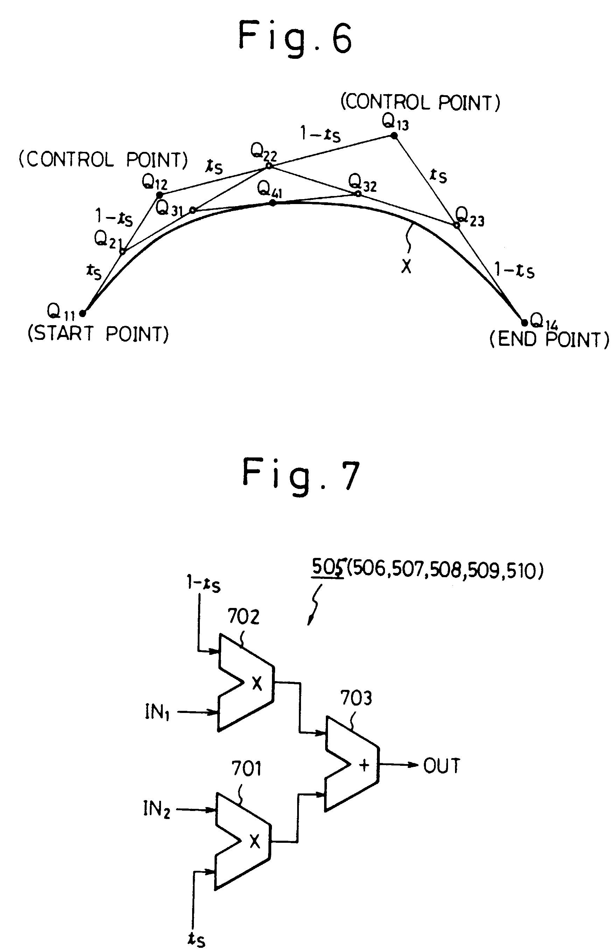

An example of the curve dividing circuit 402 is a Bezier curve dividing circuit which divides a curve by using a method whereby a curve is divided into two portions, $t_s$: $1-t_s$, from the characteristics of a three-dimensional Bezier curve (see: George M. Chaikin, "An Algorithm for High Speed Curve Generation", Computer Graphics and Image Processing, vol. 3, pp. 346-349, 1979; and Fujio Yamaguchi, "Shape Processing Technology By Computer Display" (II), Nikkan Industry, Tokyo, pp, 10 to 15, 1982). In Fig. 5, the curve dividing circuit 402 is comprised of registers 501 to 504, coordinate dividing circuits 505 to 510, and registers 511 to 518. Namely, as illustrated in Fig. 6, if coordinates $Q_{11}$ to $Q_{14}$ are given as representing a curve, such coordinates are stored in the registers 501 to 504. The coordinates $Q_{11}$ and $Q_{14}$ are also stored directly in the registers 511 and 518, respectively. The coordinate dividing circuit 505 divides a distance between the coordinates $Q_{11}$ and $Q_{12}$ by the ratio $t_s$: $1-t_s$, and generates a division coordinate $Q_{21}$ and stores it in the register 512. The coordinate dividing circuit 506 divides a distance between the coordinates $Q_{12}$ and $Q_{13}$ by the ratio $t_s$; $1-t_s$, and generates a division coordinate $Q_{22}$. The coordinate dividing circuit 507 divides a distance between the coordinator $Q_{13}$ and $Q_{14}$ by the ratio $t_s$; $1-t_s$, and generates a division coordinate $Q_{23}$ and stores it in the register 517. Also, the coordinate dividing circuit 508 divides a distance between the coordinates $Q_{21}$ and $Q_{22}$ by the ratio $t_s$; $1-t_s$, and generates a division coordinate $Q_{31}$. The coordinate dividing circuit 509 divides a distance between the coordinates $Q_{22}$ and $Q_{23}$ by the ratio $t_s$; $1-t_s$, and generates a division coordinate $Q_{32}$ and stores it in the register 516. Further the coordinate dividing circuit 510 divides a distance between the coordinates $Q_{31}$ and $Q_{32}$ by the ratio $t_s$; $1-t_s$, and generates a division coordinate $Q_{41}$ and stores it in the registers 514 and 515. At this time, as illustrated in Fig. 6, the coordinate $Q_{41}$ is that on the curve given by $Q_{11}$, $Q_{12}$, $Q_{13}$, and $Q_{14}$ obtained by dividing it by the ratio $t_s$; $1-t_s$. Simultaneously, at this coordinate $Q_{41}$, the curve is divided into two curves ($Q_{11}$, $Q_{21}$, $Q_{31}$, and $Q_{41}$; $Q_{41}$, $Q_{32}$, $Q_{23}$, and $Q_{14}$).

Note that, in Fig. 5, switching of the data input circuit 401 and the error determining circuit 404 to the input coordinates $Q_{11}$ to $Q_{14}$ of the registers 501 to 504 is carried out by switches (not shown).

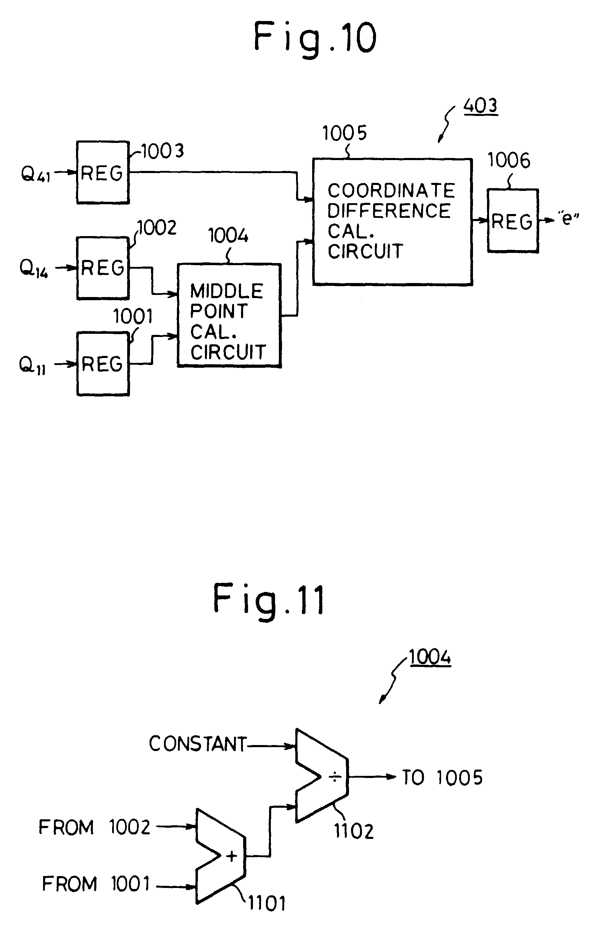

As illustrated in Fig. 7, each of the coordinate dividing circuits 505 to 510 of Fig. 5 is comprised of multipliers 701 and 702, and an adder 703. If $t_s$ is 1/2, the coordinate dividing circuits 505 to 510 can be simplified, i.e., in this case, each of the coordinate dividing circuits can comprise a mean calculating circuit which may be constructed by the configuration as illustrated in Fig. 11 where the constant is 2.

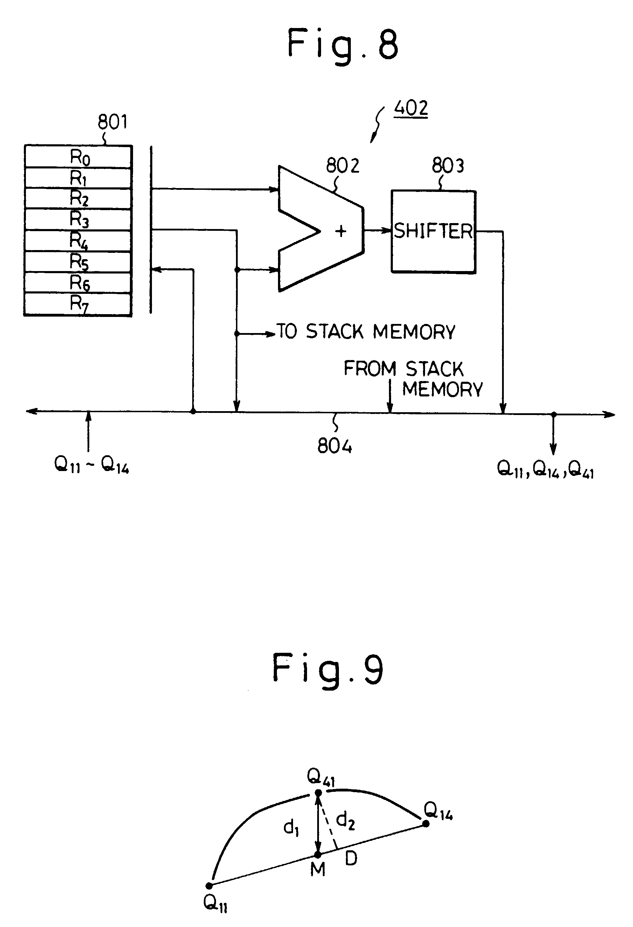

In Fig. 5, the six coordinate dividing circuits 505 to 510 and the twelve registers 501 to 504 and 511 to 518 must be provided, thus relatively increasing the manufacturing cost. Accordingly, the circuit of Fig. 5 is modified as illustrated in Fig. 8. In Fig. 8, reference numeral 801 designates a three-port register file having registers $R_0$ to $R_7$. In the register file 801, two read operations for two registers and one write operation for one register can be simultaneously carried out. Also, reference numeral 802 designates an adder, 803 a one-bit shifter, and 804 a bus. Note that the shifter 803 serves as a 1/2 divider, and accordingly, the adder 802 and the shifter 803 correspond to the coordinate dividing circuit 505 of Fig. 7, which calculates an average value of the two input values thereof under the condition that $t_s$ is 1/2.

The operation of the circuit of Fig. 8 is as follows. Note that the circuit of Fig. 8 is controlled by the microprocessor (not shown). The input data $Q_{11}$ to $Q_{14}$ from the data input circuit 401 of Fig. 4 is stored in the registers $R_0$ to $R_3$, respectively, of the register file 801.

Then, the value $Q_{14}$ of the register $R_3$ is transmitted to the stack memory (not shown). Also, the adder 802 and the shifter 803 calculate a middle point $Q_{23}$ from the values $Q_{14}$ and $Q_{13}$ of the registers $R_3$ and $R_2$, i.e., $Q_{23} \leftarrow (Q_{14} + Q_{13})/2$, and transmits the middle point $Q_{23}$ to the register $R_3$.

Then, the adder 802 and the shifter 803 calculate a middle point $Q_{22}$ from the values $Q_{13}$ and $Q_{12}$ of the registers $R_2$ and $R_1$, i.e., $Q_{22} \leftarrow (Q_{13} + Q_{12})/2$, and transmits the middle point $Q_{22}$ to the register $R_2$.

Thereafter, the adder 802 and the shifter 803 calculate a middle point $Q_{21}$ from the values $Q_{12}$ and $Q_{11}$ of the registers $R_1$ and $R_0$, i.e., $Q_{21} \leftarrow (Q_{12} + Q_{11})/2$, and transmits the middle point $Q_{21}$ to the register $R_1$, and the value $Q_{23}$ of the register $R_3$ is transmitted to the stack memory (not shown). Also, the adder 802 and the shifter 803 calculate a middle point $Q_{32}$ from the values $Q_{23}$ and $Q_{22}$ of the registers $R_3$ and $R_2$, i.e., $Q_{32} \leftarrow (Q_{23} + Q_{22})/2$, and transmits the middle point $Q_{32}$ to the register $R_3$, and the adder 802 and the shifter 803 calculate a middle point $Q_{31}$ from the values $Q_{22}$ and $Q_{21}$ of the registers $R_2$ and $R_1$, i.e., $Q_{31} \leftarrow (Q_{22} + Q_{21})/2$, and transmits the middle point $Q_{31}$ to the register $R_2$. Also, the middle point $Q_{32}$ is transmitted to the stack memory.

Then, the adder 802 and the shifter 803 calculate a middle point $Q_{41}$ from the values $Q_{32}$ and $Q_{31}$ of the register $R_3$ and $R_2$, i.e., $Q_{41} \leftarrow (Q_{32} + Q_{31})/2$, and transmits the middle point $Q_{41}$ to the register $R_3$. Also, the middle point $Q_{41}$ is transmitted to the stack memory.

Thus, the registers $R_0$ to $R_3$ of the register file 801 store the coordinates $Q_{11}$, $Q_{21}$, $Q_{31}$, and $Q_{41}$, respectively of Fig. 6, and the stack memory stores the coordinates $Q_{41}$, $Q_{32}$, $Q_{23}$, and $Q_{14}$. Note, only the coordinates $Q_{11}$, $Q_{14}$, $Q_{41}$ of the register file 801 and the stack memory are transmitted to the error calculating circuit 403 of Fig. 4 as explained below.

When an error (distance) between a curve such as $Q_{11}Q_{14}$ and a line segment $\overline{Q_{11}Q_{14}}$ is calculated, a configuration as illustrated in Fig. 9 is considered. In Fig. 9, the coordinates $Q_{11}$ and $Q_{14}$ are a start point and an end point of a curve, the coordinate $Q_{41}$ is a coordinate on the curve dividing the curve $Q_{11}Q_{14}$, the coordinate M is a middle point of the line segment $\overline{Q_{11}Q_{14}}$, and a point D is a cross point of a perpendicular from the coordinate $Q_{41}$ to the line segment $\overline{Q_{11}Q_{14}}$. A distance between the line segment $\overline{Q_{11}Q_{14}}$ obtained by linking the start point $Q_{11}$ and the end point $Q_{14}$ of the curve and the coordinate D on the curve dividing the curve is a distance $d_2$ between the coordinate $Q_{41}$ and the coordinate D. But, since it is difficult to obtain the cross-point D of the perpendicular from the coordinate $Q_{41}$ to the line segment $\overline{Q_{11}Q_{14}}$, this is not practical, and therefore, a distance $d_1$ between middle point M of the line segment $\overline{Q_{11}Q_{14}}$ and the coordinate $Q_{41}$ is used as the error. Note that the middle point M of the line segment $\overline{Q_{11}Q_{14}}$ is simply obtained, and the calculated distance $d_1$ is always longer than the actual distance $d_2$. As a result, when the distance $d_1$ obtained as the error is compared with a predetermined value, the accuracy of the approximated curve (i.e., the polygonal line,) is not reduced, thus smoothing the approximated curve.

In this case, a distance between the two points is obtained. If the two coordinates are $(X_1, Y_1)$ and $(X_2, Y_2)$, the calculation of the distance is represented by the following formula (1);

$$\text{Distance} = \{(X_1 - X_2)^2 + (Y_1 - Y_2)^2\}^{1/2} \tag{1}$$

In the formula (1), multiplication and division operations are required, and this is disadvantageous in high speed processing. To carry out only addition/subtraction operations, the difference in coordinates between the two points is obtained by the following formula (2):

$$\text{Distance} = |X_1 - X_2| + |Y_1 - Y_2| \tag{2}$$

Thus, the operations can be simplified and can be carried out at a high speed. Also, the distance obtained by the formula (2) is always longer than that obtained by the formula (1), and as a result, when the obtained distance is compared with the error, the accuracy of a approximated curve is not reduced, thus smoothing the obtained curve.

The error calculating circuit 403 of Fig. 4 for calculating the error as illustrated in Fig. 9 is illustrated in Fig. 10. In Fig. 10, references 1001, 1002, 1003, and 1006 designate registers, 1004 a middle point calculating circuit for obtaining a middle point of two input coordinates, and 1005 a coordinate difference calculating circuit for calculating a coordinate error obtained by the formula (2) from the two input coordinates.

First, among a two-divided curve output from the curve dividing circuit 402, coordinates $Q_{11}$, $Q_{14}$, and $Q_{41}$ required for the calculation of an error are stored in the registers 1001 to 1003, respectively. Here, $Q_{11}$ is a start point of a curve, $Q_{14}$ is an end point of the curve, and $Q_{41}$ is a point obtained by dividing the curve having the start point $Q_{11}$ and the end point $Q_{14}$ by the ratio $t_s$;1-$t_s$. As a result, $Q_{11}$ and $Q_{14}$ are input to the middle point calculating circuit 1004, and therefore, the middle point M of the line segment linking the start point $Q_{11}$ and the end point $Q_{14}$ is obtained at the output of the middle calculating circuit 1004. Also, the middle point M of the line segment linking the start point $Q_{11}$ and the end point $Q_{14}$ obtained by the middle point calculating circuit 1004 and the point $Q_{41}$ on the curve dividing this curve by the ratio $t_s$;1-$t_s$ is input to the coordinate difference calculating circuit 1005, and as a result, the difference between the two coordinates is obtained at the output of the coordinate difference calculating circuit 1005. This result is stored as the error e in the register 1006.

Note that the middle point calculating circuit 1004 of Fig. 10 is comprised of an adder 1101 and a divider 1102 as shown in Fig. 11.

The above-mentioned error e is compared with the threshold value by the error determining circuit 404, and as a result, when the error is smaller than the threshold value, the line segment $\overline{Q_{11}Q_{14}}$ is output from the data output circuit 405. Conversely, when the error is not smaller than the threshold value, the coordinates $Q_{11}$, $Q_{21}$, $Q_{31}$, and $Q_{41}$ of a curve are again input to the curve dividing circuit 402, and as a result, this curve is divided into two portions. At this time, the coordinates $Q_{41}$, $Q_{32}$, $Q_{23}$, and $Q_{14}$ of another curve are temporarily stored in the curve dividing circuit 402. Note that, in the case of Fig. 8, the coordinates $Q_{41}$, $Q_{32}$, $Q_{23}$, and $Q_{14}$ are stored in the stack memory (not shown). Then, when the division of the curve defined by $Q_{11}$, $Q_{21}$, $Q_{31}$, and $Q_{41}$ is completed, the curve defined by $Q_{41}$, $Q_{32}$, $Q_{22}$, $Q_{23}$, and $Q_{14}$ is input to the curve dividing circuit 402 and is processed.

A three-dimensional Bezier curve is approximated to a polygonal line by the above-mentioned process.

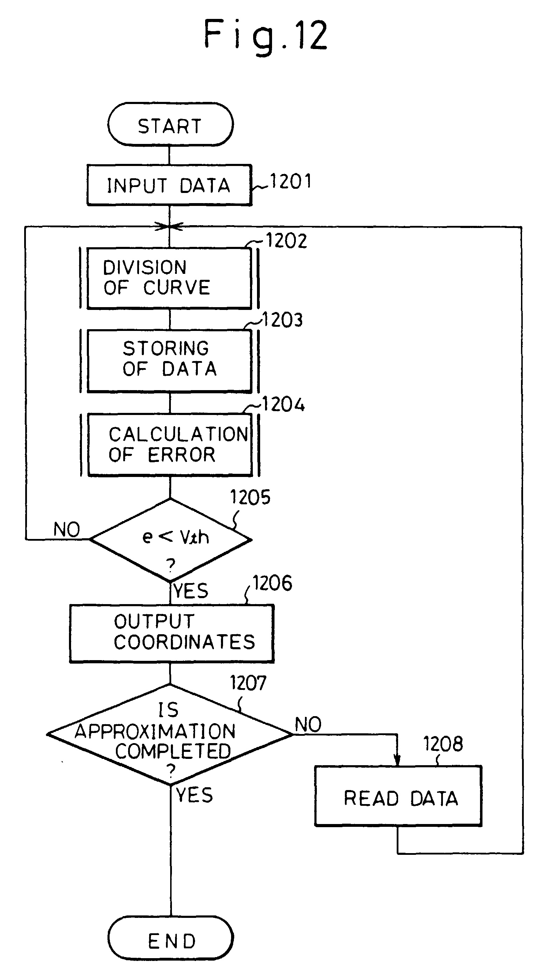

The above-mentioned embodiment can be realized by programs using a general-purpose microcomputer. For example, as illustrated in Fig. 12, at step 1201, data $Q_{11}$ to $Q_{14}$ for a three-dimensional Bezier curve is input, and at step 1202, a curve division is carried out by generating three-dimensional Bezier curve data. Then, at step 1203, eight data $Q_{11}$, $Q_{21}$, ..., and $Q_{14}$ are stored in a random access memory (RAM); at step 1204, a distance e between the middle point of the curve defined by $Q_{11}$, $Q_{21}$, ..., $Q_{14}$ and the line segment $\overline{Q_{11}Q_{14}}$ is calculated; and at step 1205, it is determined whether or not the distance e is smaller than the threshold value $V_{th}$. As a result, when the distance e $< V_{th}$, at step 1206, the line segment $\overline{Q_{11}Q_{14}}$ is output as polygonal data. Alternatively, the above-mentioned steps 1202 to 1204 are repeated, i.e., the curve is further divided. Also, at steps 1207 and 1208 the operations at steps 1202 to 1206 are repeated until all of the line segments of a polygonal line for the curve are obtained in full.

In the above-mentioned embodiment, when an error between a curve and a line segment is calculated, use is not made of control points of a three-dimensional Bezier curve which is a special case of a parametric curve defined by

$$P(t) = [t^n \ t^{n-1} \ ... \ t^2 \ t \ 1] \begin{bmatrix} A_{00} & A_{01} & \cdots & A_{0n} \\ A_{10} & A_{11} & \cdots & A_{1n} \\ \vdots & \vdots & \vdots & \vdots \\ A_{n0} & A_{n1} & \cdots & A_{nn} \end{bmatrix} \begin{bmatrix} Q_0 \\ Q_1 \\ \vdots \\ Q_n \end{bmatrix}$$

That is, a three-dimensional Beziet curve is defined by

$$P(t) = [t^3 \quad t^2 \quad t \quad 1] \begin{bmatrix} -1 & 3 & -3 & 1 \\ 3 & -6 & 3 & 0 \\ -3 & 3 & 0 & 0 \\ 1 & 0 & 0 & 0 \end{bmatrix} \begin{bmatrix} Q_{11} \\ Q_{12} \\ Q_{13} \\ Q_{14} \end{bmatrix}$$

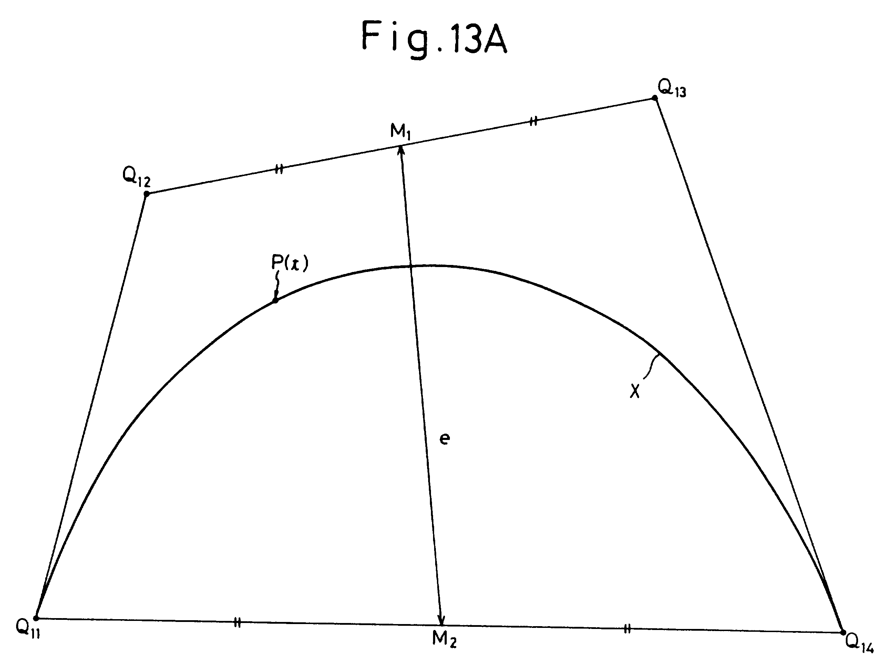

Where t is a variable from 0 to 1. For example, when $t = 0$, $P(0) = Q_{11}$, and when $t = 1$, $P(1) = Q_{14}$. Therefore, as illustrated in Fig. 13A, when the variable t is changed from 0 to 1, a curve X is obtained.

Another method of calculating an error between a curve and an approximated line segment is explained with reference to Figs. 13A to 13D. That is, use is made of a convex envelope configuration which is a characteristic of a three-dimensional Bezier curve. As illustrated in Fig. 13A, the actual curve X is always within a trapezoid defined by the coordinates $Q_{11}$, $Q_{12}$, $Q_{13}$, and $Q_{14}$. Therefore, a distance between the middle point $M_1$ of a line segment linking the two control points $Q_{12}$ and $Q_{13}$ and the middle point $M_2$ of a line segment linking the start point $Q_{11}$ and the end point $Q_{14}$ is always larger than a maximum distance between the actual curve X and the line segment $Q_{11}Q_{14}$, and as a result, when such a distance $M_1M_2$ is used as the above-mentioned error, the precision of a curve is not reduced.

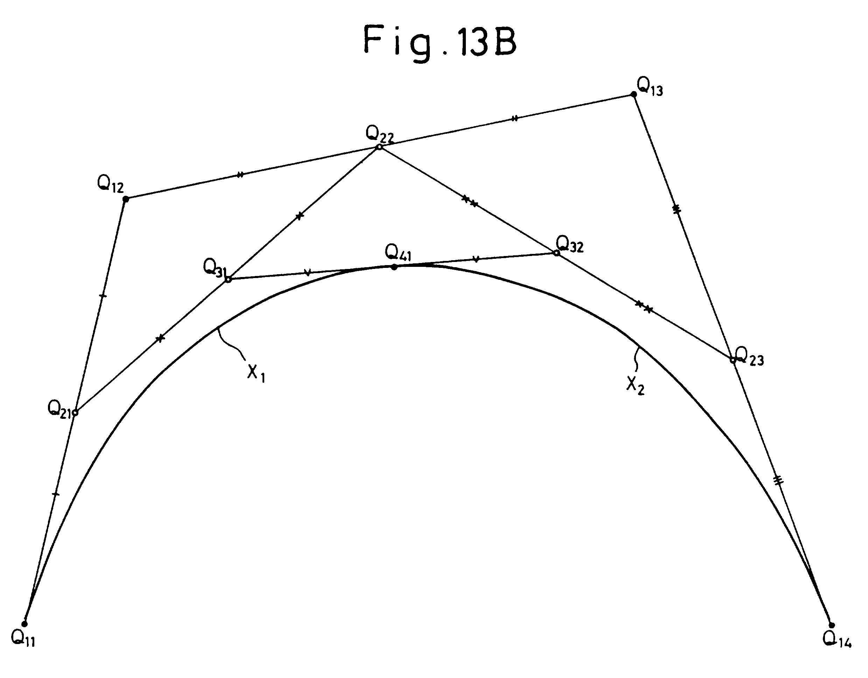

In Fig. 13A, only when the error e is not smaller than the threshold value $V_{th}$, the curve X defined by the four coordinates $Q_{11}$, $Q_{12}$, $Q_{13}$, and $Q_{14}$ is divided into a curve $X_1$ defined by four coordinates $Q_{11}$, $Q_{21}$, $Q_{31}$, and $Q_{41}$, and a curve defined by four coordinates $Q_{41}$, $Q_{32}$, $Q_{23}$, and $Q_{14}$ as illustrated in Fig. 13B.

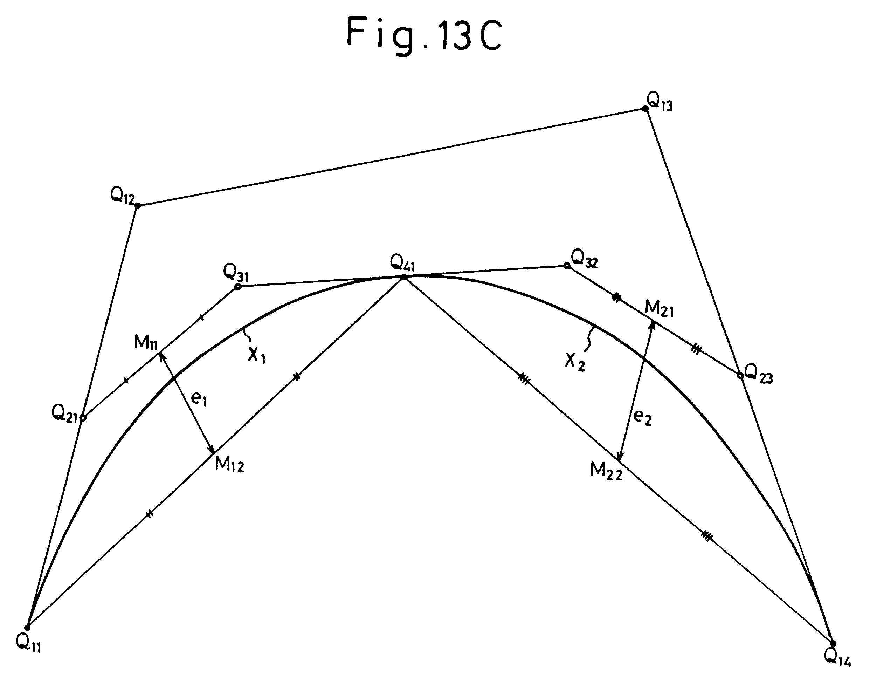

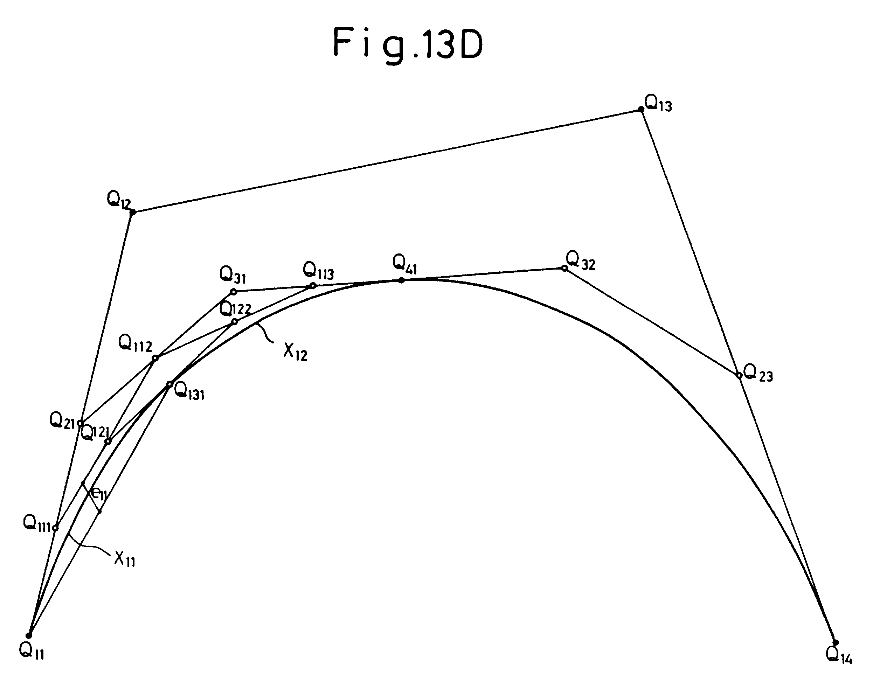

Again, as illustrated in Fig. 13C, an error $e_1$ for the curve $X_1$ is calculated by a distance $\overline{M_{11}M_{12}}$, and an error $e_2$ for the curve $X_2$ is calculated by a distance $\overline{M_{21}M_{22}}$. For example, if the error $e_1$ for the curve $X_1$ is not smaller than the threshold value $V_{th}$, the curve $X_1$ is further divided into two curves $X_{11}$ and $X_{12}$ as illustrated in Fig. 13D.

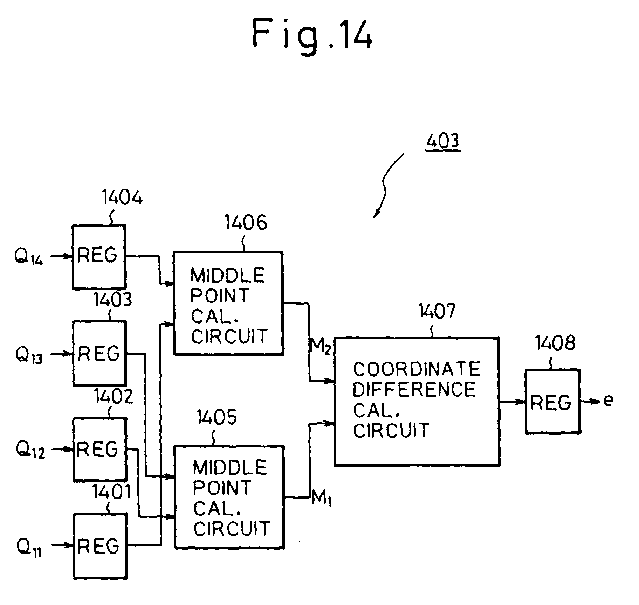

To carry out the error calculation as illustrated in Figs. 13A, 13B, 13C, and 13D, an error calculating circuit of Fig. 14 is used instead of the error calculating circuit of Fig. 10. In Fig. 14, references 1401, 1402, 1403, 1404, and 1408 designate registers, 1405 and 1406 middle point calculating circuits for obtaining a middle point of two input coordinates, and 1407 a coordinate difference calculating circuit for calculating a coordinate error obtained by the above-mentioned formula (2) from the two input coordinates. Each of the middle point calculating circuits 1405 and 1406 is the same as that of Fig. 10, and the coordinate difference calculating circuit 1407 is the same as that of Fig. 10. For example, the middle point $M_1$ of the line segment linking the control points $Q_{12}$ and $Q_{13}$ is obtained at the output of the middle point calculating circuit 1405. Also, the middle point $M_2$ of the line segment linking the start point $Q_{11}$ and the end point $Q_{14}$ is obtained at the output of the middle calculating circuit 1406. As a result, the difference between the two middle points $M_1$ and $M_2$ is obtained at the output of the coordinate difference calculating circuit 1407. This result is stored as the error e in the register 1408.

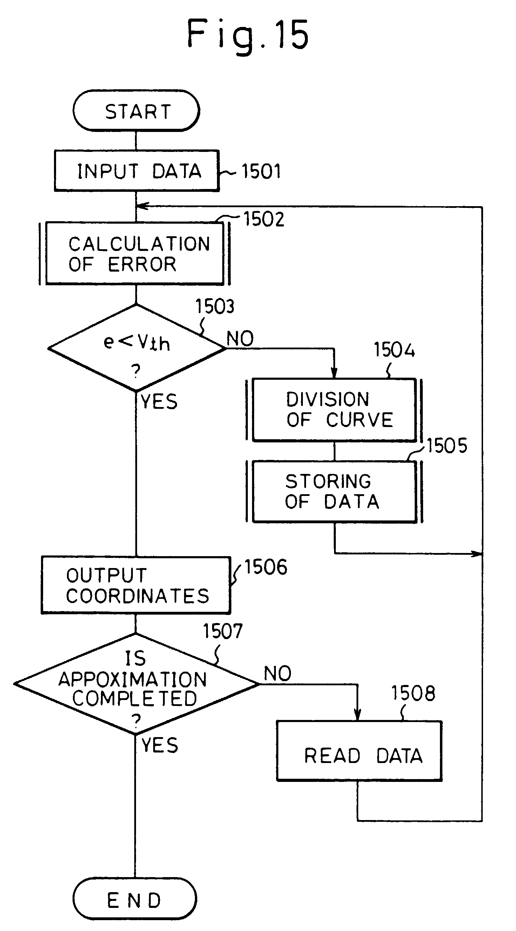

The above-mentioned embodiment using the circuit of Fig. 14 can be also realized by programs using a general-purpose microcomputer. For example, as illustrated in Fig. 15, at step 1501, data $Q_{11}$ to $Q_{14}$ for a three-dimensional Bezier curve is input, and at step 1502, a distance (error) e is calculated in accordance with the above-mentioned formula (2). Then, at step 1503, it is determined whether or not the distance e is smaller than the threshold value $V_{th}$, and as a result, when $e < V_{th}$ value, at step 1506, the line segment $\overline{Q_{11}Q_{14}}$ is output as one line segment for a polygonal data. If $e > V_{th}$, the control proceeds to steps 1504 and 1505.

At step 1504, a curve division is carried out by generating three-dimensional Bezier curve data, and at step 1505, eight data $Q_{11}$, $Q_{21}$, ..., and $Q_{14}$ are stored in the RAM and the control returns to step 1502.

That is, a division of a curve is repeated. Also, at steps 1507 and 1508, the operations at steps 1502 to 1506 are repeated until all the line segments of a polygonal line for the curve are obtained in full.

As explained above, according to the present invention, since the number of divisions for a curve, i.e., the number of line segments of a polygonal line for a curve, is changed in accordance with the curvature of this curve, the curve can be approximated effectively and smoothly to a polygonal line without increasing the processing time and the data amount.

## Claims

1. Apparatus for approximating a polygonal line to a curve, the apparatus comprising data input means (401) for generating a start point ($Q_{11}$), first and second control points ($Q_{12}$, $Q_{13}$), and an end point ($Q_{14}$) for a three-dimensional Bezier curve; calculating means (1405,1406) for calculating a first middle point ($M_1$) between the first and second control points ($Q_{12}$, $Q_{13}$) of the Bezier curve, for calculating a second middle point ($M_2$) between the start and end points of the Bezier curve, and for calculating an error (e) between the first and second middle points;

error determining means (404) for determining whether or not the error (e) is smaller than a predetermined value; and line segment generating means for generating a line segment linking between the start and end points of the three-dimensional Bezier curve as one part of the polygonal line, when the error (e) is smaller than the predetermined value ($V_{th}$), wherein the error determining means repeats the operation of the calculating means and the line segment generating means, by dividing the three-dimensional Bezier curve into two further three-dimensional Bezier curves when the error is not smaller than the predetermined value.

2. Apparatus according to claim 1, wherein the data input means is a data input circuit (401); the calculating means comprises a first middle point calculating circuit (1405), connected to the data input circuit, for calculating the first middle point ($M_1$), a second middle point calculating circuit (1406), connected to the data input circuit, for calculating the second middle point ($M_2$), and an error calculating circuit (1407), connected to said first and second middle point calculating circuits, for calculating the error (e) between the first and second points; wherein the error determining means comprises an error determining circuit (404), connected to the error calculating circuit; and wherein the line segment generating means comprises a line segment generating circuit (405), connected to the error determining circuit.

3. Apparatus according to claim 1 or claim 2, wherein the calculating means calculates a distance between the first and second middle points to constitute the error (e).

4. Apparatus according to claim 3, wherein the distance is a difference in coordinates between the first and second middle points.

5. Apparatus according to claim 1, wherein the calculating means, the error determining means, and the line segment generating means are constituted by a suitably programmed computer.

6. Curve display apparatus comprising polygonal line generating apparatus according to any of the preceding claims; and a display device for displaying the polygonal line generated by the polygonal line generating apparatus.

7. Apparatus according to claim 6, wherein the display device is a cathode ray tube (6).

8. A computer graphics method of approximating a polygonal line to a curve, the method comprising the steps of: generating a start point ($Q_{11}$), a first control point ($Q_{12}$), a second control point ($Q_{13}$), and an end point ($Q_{14}$) for a three-dimensional Bezier curve; calculating a first middle point ($M_1$) between the first and second control points of the three-dimensional Bezier curve; calculating a second middle point ($M_2$) between the start and end points of the three-dimensional Bezier curve; calculating an error (e) between the first and second middle points; determining whether or not the error (e) is smaller than a predetermined value ($V_{th}$); generating a line segment linking the start and end points of the three-dimensional Bezier curve as one part of the polygonal line, when the error is smaller than the predetermined value; and repeating the process of the four point generating step, the first middle point calculating step, the second middle point calculating step, and the line segment generating step, by dividing the three-dimensional Bezier curve into two further three-dimensional Bezier curves, when the error is not smaller than the predetermined value.

9. A method according to claim 8, wherein the error calculating step calculates a distance between the first and second middle points.

10. A method according to claim 9, wherein the distance is the difference in coordinates between the first and second middle points.

11. A method of controlling a display device to display a polygonal line approximating to a curve, the method comprising carrying out a method according to any of claims 8 to 10 and causing the display device to display the resultant polygonal line.

**Patentansprüche**

1. Vorrichtung zum Annähern einer Polygonal-Linie an eine Kurve, wobei die Vorrichtung eine Dateneingabeeinrichtung (401) aufweist, um einen Startpunkt ($Q_{11}$), erste und zweite Steuerpunkte ($Q_{12}$,$Q_{13}$) und einen Endpunkt ($Q_{14}$) für eine dreidimensionale Bezier-Kurve zu erzeugen; eine Recheneinrichtung (1405, 1406) zum Berechnen

EP 0 349 182 B1

eines ersten Mittelpunktes ($M_1$) zwischen dem ersten und dem zweiten Steuerpunkt ($Q_{12}$,$Q_{13}$) der Bezier-Kurve, um einen zweiten Mittelpunkt ($M_2$) zwischen dem Start-und Endpunkt der Bezier-Kurve zu berechnen und um einen Fehler (e) zwischen dem ersten und dem zweiten Mittelpunkt zu berechnen; eine Fehlerbestimmungseinrichtung (404), um zu bestimmen, ob der Fehler (e) kleiner ist als ein vorbestimmter Wert oder nicht; und eine Liniensegment-Erzeugungseinrichtung aufweist zum Erzeugen eines Liniensegment-Verbindungsgliedes zwischen dem Start-und dem Endpunkt der dreidimensionalen Bezier-Kurve als einen Teil der Polygon-Linie, wenn der Fehler (e) kleiner ist als der vorbestimmte Wert ($V_{th}$),wobei die Fehlerbestimmungseinrichtung die Operation der Berechnungseinrichtung und der Liniensegment-Erzeugungseinrichtung wiederholt, indem sie die dreidimensionale Bezier-Kurve in zwei weitere dreidimensionale Bezier-Kurven aufteilt, wenn der Fehler nicht kleiner ist als der vorbestimmte Wert.

2.  Vorrichtung nach Anspruch 1, bei der die Dateneingabeeinrichtung aus einer Dateneingabeschaltung (401) besteht; die Berechnungseinrichtung eine erste Mittelpunkt-Berechnungsschaltung (1405) aufweist, die an die Dateneingabeschaltung angeschlossen ist, um den ersten Mittelpunkt ($M_1$) zu berechnen, eine zweite Mittelpunkt-Berechnungsschaltung (1406) aufweist, die an die Dateneingabeschaltung angeschlossen ist, um den zweiten Mittelpunkt ($M_2$) zu berechnen, und eine Fehlerberechnungsschaltung (1407) aufweist, die an die erste und die zweite Mittelpunkt-Berechnungsschaltung angeschlossen ist, um den Fehler (e) zwischen dem ersten und dem zweiten Punkt zu berechnen; wobei die Fehlerbestimmungseinrichtung eine Fehlerbestimmungsschaltung (404) umfaßt, die an die Fehlerberechnungsschaltung angeschlossen ist; und wobei die Liniensegment-Erzeugungseinrichtung eine Liniensegment-Erzeugungsschaltung (405) umfaßt, die an die Fehlerbestimmungsschaltung angeschlossen ist.

3.  Vorrichtung nach Anspruch 1 oder Anspruch 2, bei der die Berechnungseinrichtung einen Abstand zwischen dem ersten und dem zweiten Mittelpunkt berechnet, um den Fehler (e) abzuleiten.

4.  Vorrichtung nach Anspruch 3, bei der der Abstand eine Differenz in den Koordinaten zwischen dem ersten und dem zweiten Mittelpunkt ist.

5.  Vorrichtung nach Anspruch 1, bei der die Berechnungseinrichtung, die Fehlerbestimmungseinrichtung und die Liniensgement-Erzeugungseinrichtung durch einen geeignet programmierten Computer gebildet sind.

6.  Kurvenanzeigevorrichtung mit einer Polygon-Linien-Erzeugungsvorrichtung nach irgendeinem der vorhergehenden Ansprüche; und eine Anzeigevorrichtung zur Darstellung der Polygon-Linie, die durch die Polygon-Linien-Erzeugungsvorrichtung erzeugt wurde.

7.  Vorrichtung nach Anspruch 6, bei der die Anzeigevorrichtung aus einer Kathodenstrahlröhre (6) gebildet ist.

8.  Computergraphik-Verfahren zur Annäherung einer Polygon-Linie an eine Kurve, wobei das Verfahren die folgenden Schritte umfaßt: Erzeugen eines Startpunktes ($Q_{11}$), eines ersten Steuerpunktes ($Q_{12}$), eines zweiten Steuerpunktes ($Q_{13}$) und eines Endpunktes ($Q_{14}$) für eine dreidimensionale Bezier-Kurve; Berechnen eines ersten Mittelpunktes ($M_1$) zwischen dem ersten und dem zweiten Steuerpunkt der dreidimensionalen Bezier-Kurve; Berechnen eines zweiten Mittelpunktes ($M_2$) zwischen dem Start-und Endpunkt der dreidimensionalen Bezier-Kurve; Berechnen eines Fehlers (e) zwischen dem ersten und dem zweiten Mittelpunkt; Bestimmen, ob der Fehler (e) kleiner ist als ein vorbestimmter Wert ($V_{th}$) oder nicht ; Erzeugen eines Liniensegments, welches den Startpunkt und den Endpunkt der dreidimensionalen Bezier-Kurve als einen Teil der Polygon-Linie verbindet, wenn der Fehler kleiner ist als der vorbestimmte Wert; und Wiederholen des Prozesses des Vier-Punkt-Erzeugungsschrittes, des ersten Mittelpunkt-Berechnungsschrittes, des zweiten Mittelpunkt-Berechnungsschrittes und des Liniensegment-Erzeugungsschrittes, indem die dreidimensionale Bezier-Kurve in zwei weitere dreidimensionale Bezier-Kurven aufgeteilt wird, wenn der Fehler nicht kleiner ist als der vorbestimmte Wert.

9.  Verfahren nach Anspruch 8, bei dem bei dem Fehlerberechnungsschritt ein Abstand zwischen dem ersten und dem zweiten Mittelpunkt berechnet wird.

10. Verfahren nach Anspruch 9, bei dem der Abstand die Differenz in den Koordinaten zwischen dem ersten und dem zweiten Mittelpunkt ist.

11. Verfahren zur Steuerung einer Anzeigevorrichtung, um eine Polygon-Line darzustellen, die an eine Kurve angenähert ist, wobei das Verfahren durch Ausführen eines Verfahrens nach irgendeinem der Ansprüche 8 bis 10

## EP 0 349 182 B1

realisiert wird und die Anzeigevorrichtung veranlaßt wird, die resultierende Polygon-Linie darzustellen.

**Revendications**

1. Appareil pour l'approximation d'une courbe par une ligne polygonale, l'appareil comprenant un moyen d'entrée de données (401) pour engendrer un point de début ($Q_{11}$), des premier et second points de commande ($Q_{12}$, $Q_{13}$), et un point de fin ($Q_{14}$) pour une courbe de Bezier à trois dimensions ; des moyens de calcul (1405, 1406) pour calculer un premier point central ($M_1$) entre les premier et second points de commande ($Q_{12}$, $Q_{13}$) de la courbe de Bezier, pour calculer un second point central ($M_2$) entre les points de début et de fin de la courbe de Bezier, et pour calculer une erreur (e) entre les premier et second points centraux ; un moyen de détermination d'erreur (404) pour déterminer si l'erreur (e) est ou non inférieure à une valeur prédéterminée ; et un moyen de génération de segment linéaire pour engendrer un segment linéaire reliant les points de début et de fin de la courbe de Bezier à trois dimensions comme partie de la ligne polygonale, quand l'erreur (e) est inférieure à la valeur prédéterminée ($V_{th}$), dans lequel le moyen de détermination d'erreur répète l'opération des moyens de calcul et du moyen de génération de segment linéaire, en divisant la courbe de Bezier à trois dimensions en deux autres courbes de Bezier à trois dimensions quand l'erreur n'est pas inférieure à la valeur prédéterminée.

2. Appareil selon la revendication 1, dans lequel le moyen d'entrée de données est un circuit d'entrée de données (401) ; les moyens de calcul comprennent un premier circuit de calcul de point central (1405), connecté au circuit d'entrée de données, pour calculer le premier point central ($M_1$), un second circuit de calcul de point central (1406), connecté au circuit d'entrée de données, pour calculer le second point central ($M_2$), et un circuit de calcul d'erreur (1407), connecté auxdits premier et second circuits de calcul de point central, pour calculer l'erreur (e) entre les premier et second points centraux ; dans lequel le moyen de détermination d'erreur comprend un circuit de détermination d'erreur (404), connecté au circuit de calcul d'erreur ; et dans lequel le moyen de détermination de segment linéaire comprend un circuit de génération de segment linéaire (405), connecté au circuit de détermination d'erreur.

3. Appareil selon la revendication 1 ou la revendication 2, dans lequel les moyens de calcul calculent une distance entre les premier et second points centraux pcur constituer l'erreur (e).

4. Appareil selon la revendication 3, dans lequel la distance est une différence de coordonnées entre les premier et second points centraux.

5. Appareil selon la revendication 1, dans lequel les moyens de calcul, le moyen de détermination d'erreur, et le moyen de génération de segment linéaire sont constitués par un ordinateur programmé de façon appropriée.

6. Appareil d'affichage de courbe comprenant un appareil de génération de ligne polygonale selon l'une quelconque des revendications précédentes, et un dispositif d'affichage pour afficher la ligne polygonale générée par l'appareil de génération de ligne polygonale.

7. Appareil selon la revendication 6, dans lequel le dispositif d'affichage est un tube cathodique (6).

8. Méthode graphique par ordinateur pour l'approximation d'une courbe par une ligne polygonale, la méthode comprend les étapes qui consistent à : engendrer un point de début ($Q_{11}$), un premier point de commande ($Q_{12}$), un second point de commande ($Q_{13}$), et un point de fin ($Q_{14}$) pour une courbe de Bezier à trois dimensions ; calculer un premier point central ($M_1$) entre les premier et second points de commande de la courbe de Bezier à trois dimensions ; calculer un second point central ($M_2$) entre les points de début et de fin de la courbe de Bezier à trois dimensions ; calculer une erreur (e) entre les premier et second points centraux ; déterminer si l'erreur (e) est ou non inférieure à une valeur prédéterminée ($V_{th}$) ; engendrer un segment linéaire reliant les points de début et de fin de la courbe de Bezier à trois dimensions comme partie de la ligne polygonale, quand l'erreur est inférieure à la valeur prédéterminée ; et répéter le traitement de l'étape de génération des quatre points, de l'étape de calcul du premier point central, de l'étape de calcul du second point central, et de l'étape de génération du segment linéaire, en divisant la courbe de Bezier à trois dimensions en deux autres courtes de Bezier à trois dimensions, quand l'erreur n'est pas inférieure à la valeur prédéterminée.

9. Méthode selon la revendication 8, dans laquelle l'étape de calcul d'erreur calcule une distance entre les premier et second points centraux.

10. Méthode selon la revendication 9, dans laquelle la distance est la différence de coordonnées entre les premier et second points centraux.

11. Procédé pour commander un dispositif d'affichage afin d'afficher une ligne polygonale d'approximation d'une courbe, le procédé consistant à exécuter une méthode selon l'une quelconque des revendications 8 à 10 et faisant en sorte que le dispositif d'affichage affiche la ligne polygonale résultante.

# Fig.1

# Fig.2

Fig. 3

1 — PATTERN DATA INPUT UNIT → 2 — COORDINATE CONVERSION UNIT → 3 — CURVE GENERATING UNIT → 4 — GRAPHIC PROCESSING UNIT → 5 — DISPLAY CONTROL UNIT → 6 — CRT

Fig. 4

3

401 — DATA INPUT CIRCUIT → $Q_{11} \sim Q_{14}$ → 402 — CURVE DIVIDING CIRCUIT → $Q_{11}, Q_{14}, Q_{41}$ → 403 — ERROR CALCULATING CIRCUIT → 404 — ERROR DETERMING CIRCUIT → 405 — DATA OUTPUT CIRCUIT

# Fig. 5

# Fig. 6

(CONTROL POINT)
$Q_{13}$

$1-t_S$

(CONTROL POINT)
$t_S$
$Q_{22}$

$Q_{12}$
$Q_{41}$
$Q_{32}$
$t_S$

$1-t_S$
$Q_{31}$
$Q_{23}$

$Q_{21}$
X

$t_S$
$1-t_S$

$Q_{11}$
$Q_{14}$
(START POINT)
(END POINT)

# Fig. 7

$\underline{505}(506,507,508,509,510)$

$1-t_S$

702

IN$_1$
703

OUT

701

IN$_2$

$t_S$

# Fig.8

# Fig.9

# Fig.10

# Fig.11

# Fig.12

# Fig.13A

EP 0 349 182 B1

# Fig.13B

EP 0 349 182 B1

Fig.13C

Fig.13D

# Fig.14

# Fig.15

START

INPUT DATA ~1501

CALCULATION OF ERROR ~1502

e < Vth ? 1503

NO → DIVISION OF CURVE 1504

STORING OF DATA 1505

YES

OUTPUT COORDINATES 1506

IS APPOXIMATION COMPLETED ? 1507

NO → READ DATA 1508

YES

END